# EUROPEAN PATENT SPECIFICATION

(11) **EP 4 338 601 B1**
(45) Date of publication and mention of the grant of the patent: **25.06.2025**
(21) Application number: 23195771.3
(22) Date of filing: 06.09.2023
(51) Int. Cl.: A23N 17/00

(54) **DEVICE FOR THE DOMESTIC PRODUCTION OF DRY FOOD, IN PARTICULAR DRY FOOD FOR PETS**
VORRICHTUNG ZUR HAUSHALTSHERSTELLUNG VON TROCKENNAHRUNG, INSBESONDERE TROCKENNAHRUNG FÜR HAUSTIERE
DISPOSITIF DE FABRICATION DOMESTIQUE D'ALIMENTS SECS, NOTAMMENT D'ALIMENTS SECS POUR ANIMAUX DOMESTIQUES

(30) Priority: 15.09.2022 IT 202200018855
(43) Date of publication of application: 20.03.2024
(73) Proprietor: Viola, Roberta, 40024 Castel San Pietro Terme (BO) (IT)
(72) Inventor: Viola, Roberta, 40024 Castel San Pietro Terme (BO) (IT)
(74) Representative: Studio Torta S.p.A.

(56) References cited:
- CN-A- 108 523 181
- CN-A- 112 220 085
- CN-A- 113 017 127
- CN-B- 108 142 966
- CN-U- 207 322 653

## Description

### Technical field

This invention relates to a device for the domestic production of dry food, in particular dry food for pets.

### Background of the invention

As is known, more and more people live with pets or companion animals. The presence of a pet may have positive repercussions for the person, family, and whole society. The pet may represent an investment targeting mental and physical well-being and overcoming difficulties. Having a pet may bring various benefits to the person's health. As well as a very stable mood due to sharing affection with the animal, in some cases, the proximity of an animal may contribute to lowering blood pressure (for example, it is believed that cats have this effect) and cholesterol, reducing anxiety and allergies and, according to some, could entail benefits in the event of illness as well. The majority of pets belong to a precise number of species, which are preferred for their look and behaviour. In addition to cats and domestic dogs, we note rodents, including hamsters and rabbits, guinea pigs, mice, gerbils, chinchillas, degus, squirrels, lab animals, rats, and prairie dogs.
These animals' feed comprises, among other things, dry food that is normally available in the form of biscuits, which is purchased in specialty stores and supermarkets.

The patent CN 113 017 127 A describes a device for the preparation of food for domestic cats with drying and automatic granulation functions.

The purpose of this invention is to provide a device for the domestic preparation of dry food using (and potentially recycling foods) products used for human nutrition.

It should be noted that the dry food produced may also be used for human nutrition.

### Summary of the invention

The above purpose is achieved with this invention since this relates to a device for the domestic production of dry food, in particular dry food for pets produced according to claim 1.

### Brief description of the drawings

The invention will now be illustrated with reference to the attached drawings wherein:
Figure 1 shows, in perspective view, a device for the domestic production of dry food, in particular dry food for pets produced according to the precepts of this invention;
Figure 2 shows, in longitudinal cross-section, the device in Figure 1 arranged in a first operating position;
Figure 3 shows, in longitudinal cross-section, the device in Figure 1 arranged in a second operating position;
Figure 4 shows, in perspective and on an enlarged scale, a detail of the device in Figure 1;
Figures 5 and 6 show an alternative embodiment of a part of the device illustrated in Figures 1 to 4.

### Description

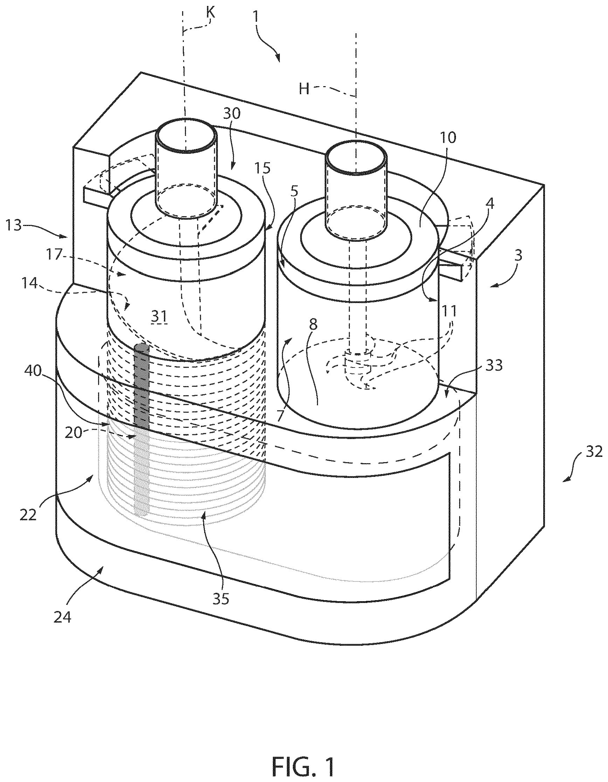

In Figure 1, reference number 1 denotes, as a whole, a device for the domestic production of dry food that can be used for pets, in particular cats and domestic dogs, or for human nutrition.

The device 1 comprises a first processing unit 3 defining a first inner cavity 4 (in the example, a cylindrical cavity that is coaxial to an axis H) provided with a first upper opening 5 for inserting edible material to be shredded, such as vegetables, bread, pasta, various meats (white and red), cereals, fruit etc.

The first processing unit 3 is provided with a device for shredding 7 the material inserted (which is known) and a heater device 8 (also known) designed to at least partially cook the material inserted.

In the non-limiting example illustrated, the first processing unit 3 comprises a cylindrical container that is coaxial to the axis H and a removable lid 10 designed to close the opening 5. The lid 10 has an electric motor (not illustrated) that moves a series of blades 11 arranged at the end of a shaft coaxial to the axis H and designed to shred the material introduced using technologies known in the kitchen appliance sector. A series of resistors (not illustrated) heat the walls of the container, for example a bottom wall. The container may be made of washable material, for example stainless steel. The first processing unit 7 shreds, mixes, and heats the material inserted and is designed to produce a semi-fluid food mixture. Conveniently, a timer that can be set manually to define an operating time, for which the edible material inserted is shredded and heated, can be provided. The temperature can also be controlled using known methods.

The device 1 also comprises a second processing unit 13 defining a second inner cavity 14 provided with an opening 15 configured to receive the semi-fluid food mixture produced by the first unit 3. For example, the mixture may be manually poured by tilting the first container after having removed the lid 10.

The second processing unit 13 is provided with a pusher device 17 configured to insert the food mixture into multiple channels 20 made in a forming device 22 that will be described in detail below. The forming device 22 is provided with a heater 24 (Figure 1) configured to harden the food mixture at least partially in the channels 20.

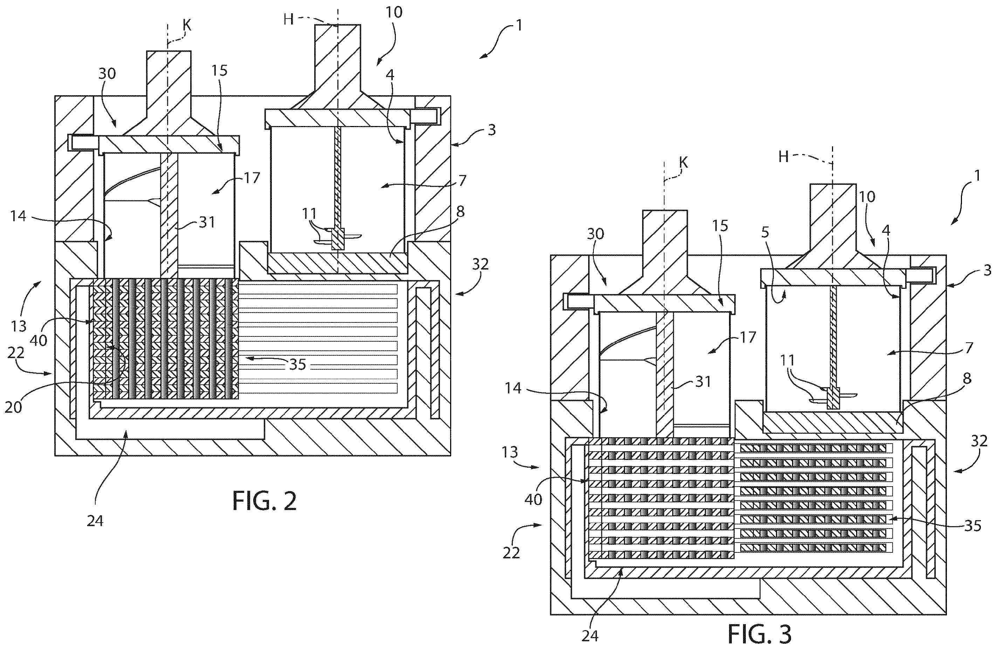

In the non-limiting example illustrated, the second processing unit 13 comprises a tubular cylindrical container that is coaxial to an axis K parallel to the axis H (Figures 2 and 3) and a removable lid 30 designed to close the opening 15. The lid 30 has an electric motor (not illustrated) that moves an auger device 31 carried by a shaft coaxial to the axis K and designed to push the mixture towards the bottom of the tubular container. In this case too, the tubular container may be made of washable material, for example stainless steel.

The tubular container is open at its bottom and directly communicates with the forming device 22.

Conveniently, a supporting structure 32 is provided that defines an upper support wall 33 on which the first unit 3 and the second unit 13 are arranged next to each other and arranged with axes H and K being parallel; the supporting structure 32 carries the forming device 22 arranged below the wall 33 and the second unit 13 and communicating with the bottom opening of the tubular container. The supporting structure 32 may be made, for example, of plastic material.

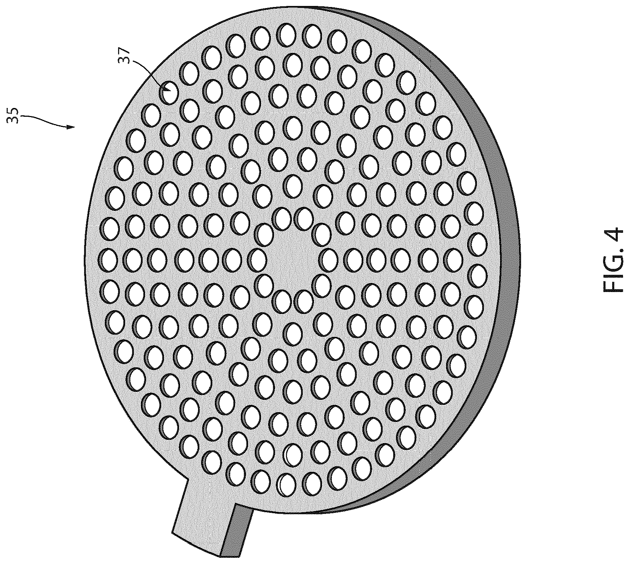

The forming device 22 comprises multiple, disc-shaped flat walls 35 according to the embodiment of Figures 1-4 (Figure 4 shows a single wall) each provided with multiple through holes 37 that have, in the example, a circular shape.

The shape may be different, for example square, triangular, star-shaped, etc., as shown below. The dimensions of the through holes 37 may also be different to those illustrated. The walls 35 are housed in a cavity of the supporting structure 32.

The walls 35 are housed in a cavity of the supporting structure 32 and are preferably made of metal.

The disc-shaped flat walls 35 are available between:
a first aligned position (Figure 2) in which the walls 35 are stacked and each hole 37 of a wall is coaxial with respective through holes of all the other walls 35 to produce a respective channel 20, each channel 20 being delimited by the internal surfaces of through holes 37 belonging to successive stacked walls 35 and being configured to contain the food mixture that, when it solidifies, produces a food core inside the channel 20; and
an unaligned position (Figure 3) in which the walls 33 are arranged with the through holes 37 moved laterally with respect to the aligned position in order to interrupt the continuity of the previously formed core, shredding it into dry food, the shape of which is determined by the shape of the holes 37.

The walls 35 may be arranged manually stacked so as to be arranged in the first aligned position and, subsequently, may be arranged inside the supporting structure 32 and arranged below the second feeding unit 17 to allow the insertion of the food mixture inside the channels 20 under the thrust of the auger 31.

The walls 35 may be moved, one in relation to the other, for the crushing of the core, manually as well, after having withdrawn the stack of walls 33 from the support unit 32.

Subsequently, the walls 35 are uncoupled from each other to allow the exit of the core portions that produce individual biscuits that are dropped, by gravity / or shaking the wall 35 and collected in a container.

Subsequently, the disc walls 33 may be washed, for example arranging them in a dishwasher.

Alternatively, the movement of the walls 35 could be either fully or partially automated.

Conveniently, the heater 24 is an air heater and comprises a fan designed to send a flow of heated air that hits the flat walls 35.

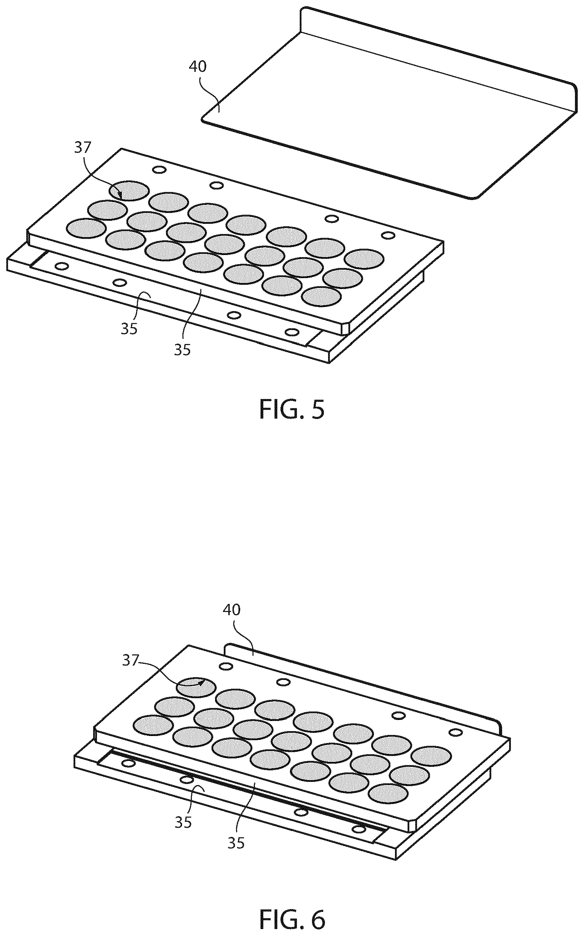

With reference to Figures 5 and 6, the alternative embodiment of the forming device 22 comprises a pair of flat, rectangular walls 35 (or with another shape) each provided with multiple through holes 37 that have, in the example, a circular shape. The holes 37 are arranged in an ordered matrix structure.

The walls 35 are housed in a cavity of the supporting structure 32.

In addition, a flat cutting blade 40 is provided moving on a plane parallel to the plane on which the walls lie and mobile between an extracted position in which the flat blade 40 is arranged spaced with respect to the overlapping walls 35 and an inserted position in which the cutting blade is arranged in an insertion position between opposite faces of overlapping walls 35 in order to interrupt the continuity of the cores and shred them. The flat cutting blade 40 may be moved manually or using an actuator (not illustrated).

The device 1 performs the following operations:
a first aligned position (Figure 5) in which the walls 35 are stacked and each hole 37 of a wall is coaxial with at least one respective through hole of the other wall 35 to produce a respective channel 20, each channel 20 being delimited by the internal surfaces of through holes 37 belonging to successive stacked walls 35 and being configured to contain the food mixture that, when it solidifies, produces a food core inside the channel 20 - in this position the flat cutting blade 40 is arranged in the extracted position;
the cutting blade 40 is arranged in the insertion position so as to cut and separate the portions of cores housed in different walls 35; and
an unaligned position (not shown) in which the walls 35 are arranged with the through holes 37 moved laterally in relation to the aligned position.

Subsequently, the walls 35 are uncoupled from each other to allow the exit of the core portions that produce individual biscuits that are dropped, by gravity / or shaking the wall 35 and collected in a container.

Subsequently, the walls 35 may be washed, for example arranging them in a dishwasher.

### REFERENCE NUMERALS

1 device for the domestic production of dry food material for animals
3 first processing unit
4 inner cavity
5 first opening
7 device for shredding the material inserted
8 heater device
10 removable lid
11 blades
13 second processing unit
14 second inner cavity
15 opening
17 pusher device
20 channels
22 forming device
24 heater
30 removable lid
31 auger device
32 supporting structure
33 support wall
35 disc flat wall
40 cutting blade

## Claims

1. A device (1) for the domestic production of dry food, in particular dry food for pets, **characterized by** comprising:
a first processing unit (3) defining a first inner cavity (4) provided with an opening (5) for the insertion of edible material to be shredded, said first processing unit (3) being provided with a device for shredding the material inserted (7) and a heater device (8) adapted to at least partially cook the material inserted; said first processing unit (3) being configured to shred, mix, and heat the material inserted producing a semi-fluid food mixture;
a second processing unit (13) defining a second inner cavity (14) provided with an opening (15) configured to receive the semi-fluid food mixture produced by the first unit (13); said second processing unit (13) being provided with pusher means (17) configured to inject said food mixture into a plurality of channels (20) produced in a forming device (22);
the forming device (22) being provided with a heater (24) configured to harden the food mixture at least partially in the channels (20) producing food cores;
the forming device (22) being provided with at least two flat walls (35) each provided with a plurality of through holes (37), said flat walls (35) are available between:
a first aligned position in which the flat walls (35) are stacked and each hole (37) of a wall is coaxial with a respective through hole (37) of the other wall (35) to produce a respective channel (20), each channel (20) being delimited by the internal surfaces of through holes (37) belonging to the at least two stacked walls and being configured to contain the food mixture that, when it solidifies, produces said food core inside the channel (20); and
an unaligned position in which the flat walls (35) are arranged with the through holes moved with respect to the aligned position in order to interrupt the continuity of the previously formed core shredding it into dry food, the shape of which is determined by the shape of the through holes (37).

2. The device according to claim 1, wherein said heater (24) is of the air type and is adapted to send a flow of heated air incident on said at least two flat walls (35).

3. The device according to claim 1 or 2, wherein the first processing unit is provided with timer means adapted to define a processing time for which the edible material inserted is shredded and is heated inside the first processing unit (3).

4. The device according to one of the preceding claims, wherein a supporting structure (32) is provided, defining an upper support wall (33) on which the first processing unit (3) and the second processing unit (13) are arranged side by side with each other; supporting structure (32) carrying said forming device (22) arranged under the support wall (33) and the second unit (13) and communicating with a bottom portion of said second cavity.

5. The device according to one of the preceding claims, wherein a flat cutting blade (40) is provided moving on a plane parallel to the plane on which the flat walls (35) lie between an extracted position in which the flat blade (40) is arranged spaced with respect to the superimposed flat walls (35) and an inserted position in which the cutting blade (40) is arranged in an insertion position between facing faces of superimposed flat walls (35) in order to interrupt the continuity of the core and shred it; the movement of the flat cutting blade (40) is performed manually or by means of an actuator.

## Patentansprüche

1. - Vorrichtung (1) zur häuslichen Herstellung von Trockenfutter, insbesondere von Trockenfutter für Haustiere, **dadurch gekennzeichnet, dass** sie umfasst:
eine erste Verarbeitungseinheit (3), die einen ersten inneren Hohlraum (4) definiert, der mit einer Öffnung (5) zum Einführen des zu zerkleinernden essbaren Materials versehen ist, wobei die erste Verarbeitungseinheit (3) mit einer Vorrichtung zum Zerkleinern des eingeführten Materials (7) und einer Heizvorrichtung (8) versehen ist, die eingerichtet ist, das eingeführte Material mindestens teilweise zu kochen; wobei die erste Verarbeitungseinheit (3) dazu konfiguriert ist, das eingeführte Material zu zerkleinern, zu mischen und zu erhitzen, wodurch eine halbflüssige Futtermischung hergestellt wird;
eine zweite Verarbeitungseinheit (13), die einen zweiten inneren Hohlraum (14) definiert, der mit einer Öffnung (15) versehen ist, die dazu konfiguriert ist, die halbflüssige Futtermischung aufzunehmen, die von der ersten Einheit (13) hergestellt wird; wobei die zweite Verarbeitungseinheit (13) mit Schiebermittel (17) versehen ist, die dazu konfiguriert sind, die Futtermischung in eine Vielzahl von Kanälen (20) einzuspritzen, die in einer Formungsvorrichtung (22) erzeugt werden; wobei die Formungsvorrichtung (22) mit einem Heizelement (24) versehen ist, das dazu konfiguriert ist, die Futtermischung mindestens teilweise in den Kanälen (20) zu härten, indem Futterkerne hergestellt werden;
die Formungsvorrichtung (22) mit mindestens zwei Flachwänden (35) versehen ist, die jeweils mit einer Vielzahl von Durchgangsbohrungen (37) versehen sind, wobei die Flachwände (35) zwischen diesen verfügbar sind:
eine erste ausgerichtete Position, in der die Flachwände (35) gestapelt sind und jede Bohrung (37) einer Wand mit einer jeweiligen Durchgangsbohrung (37) der anderen Wand (35) koaxial ist, um einen jeweiligen Kanal (20) herzustellen, wobei jeder Kanal (20) durch die Innenflächen von Durchgangsbohrungen(37) begrenzt wird, die zu mindestens zwei gestapelten Wänden gehören, und dazu konfiguriert ist, die Futtermischung zu enthalten, die, wenn sie sich verfestigt, den Futterkern innerhalb des Kanals (20) herstellt; und
eine nicht ausgerichtete Position, in der die Flachwände (35) angeordnet sind, sodass die Durchgangsbohrungen gegenüber der ausgerichteten Position bewegt werden, um die Kontinuität des zuvor ausgebildeten Kerns zu unterbrechen, indem er in Trockenfutter zerkleinert wird, dessen Form durch die Form der Durchgangsbohrungen (37) bestimmt wird.

2. Vorrichtung nach Anspruch 1, wobei das Heizelement (24) Lufttyp ist und eingerichtet ist, einen Strom erhitzter Luft einfallend auf die mindestens zwei Flachwände (35) zu senden.

3. Vorrichtung nach Anspruch 1 oder 2, wobei die erste Verarbeitungseinheit mit Zeitgebermitteln versehen ist, die eingerichtet sind, eine Verarbeitungszeit zu definieren, während der das eingeführte essbare Material zerkleinert wird und innerhalb der ersten Verarbeitungseinheit (3) erhitzt wird

4. Vorrichtung nach einem der vorhergehenden Ansprüche, wobei eine Stützstruktur (32) vorgesehen ist, die eine obere Stützwand (33) definiert, auf der die erste Verarbeitungseinheit (3) und die zweite Verarbeitungseinheit (13) nebeneinander angeordnet sind; wobei die Stützstruktur (32) die Formungsvorrichtung (22) trägt, die unter der Stützwand (33) und der zweiten Einheit (13) angeordnet ist und die mit einem Bodenabschnitt des zweiten Hohlraums in Kommunikation steht.

5. - Vorrichtung nach einem der vorhergehenden Ansprüche, wobei eine flache Schneidklinge (40) vorgesehen ist, die sich auf einer Ebene parallel zu der Ebene, auf der sich die Flachwände (35) befinden, zwischen einer herausgezogenen Position, in der die flache Klinge (40) mit Abstand in Bezug auf die übereinanderliegenden Flachwänden (35) angeordnet ist, und einer eingeführten Position bewegt, in der die Schneidklinge (40) in einer Einfügeposition zwischen einander zugewandten Flächen von übereinanderliegenden Flachwänden (35) angeordnet ist, um die Kontinuität des Kerns zu unterbrechen und ihn zu zerkleinern; wobei die Bewegung der flachen Schneidklinge (40) manuell oder mit Hilfe eines Aktuators durchgeführt wird.

## Revendications

1. - Dispositif (1) pour la production domestique d'aliments secs, en particulier d'aliments secs pour animaux domestiques, **caractérisé en ce qu'**il comprend :
une première unité de traitement (3) définissant une première cavité intérieure (4) pourvue d'une ouverture (5) pour l'insertion d'une matière comestible à déchiqueter, ladite première unité de traitement (3) étant pourvue d'un dispositif de déchiquetage de la matière insérée (7) et d'un dispositif de chauffage (8) adapté pour cuire au moins partiellement la matière insérée ; ladite première unité de traitement (3) étant configurée pour déchiqueter, mélanger et chauffer la matière insérée, produisant ainsi un mélange alimentaire semi-fluide ;
une seconde unité de traitement (13) définissant une seconde cavité intérieure (14) dotée d'une ouverture (15) configurée pour recevoir le mélange alimentaire semi-fluide produit par la première unité (13) ; ladite seconde unité de traitement (13) étant dotée de moyens de poussée (17) configurés pour injecter ledit mélange alimentaire dans une pluralité de canaux (20) produits dans un dispositif de formage (22) ; le dispositif de formage (22) étant doté d'un dispositif de chauffage (24) configuré pour durcir le mélange alimentaire au moins partiellement dans les canaux (20) produisant des noyaux d'aliment ;
le dispositif de formage (22) étant pourvu d'au moins deux parois plates (35) pourvues chacune d'une pluralité de trous de passage (37), lesdites parois plates (35) étant disponibles entre :
une première position alignée dans laquelle les parois plates (35) sont empilées et chaque trou (37) d'une paroi est coaxial avec un trou de passage (37) respectif de l'autre paroi (35) pour produire un canal respectif (20), chaque canal (20) étant délimité par les surfaces internes des trous de passage (37) appartenant aux au moins deux parois empilées et étant configuré pour contenir le mélange alimentaire qui, lorsqu'il se solidifie, produit ledit noyau d'aliment à l'intérieur du canal (20) ; et
une position non alignée dans laquelle les parois plates (35) sont disposées avec les trous de passage déplacés par rapport à la position alignée afin d'interrompre la continuité du noyau précédemment formé en le déchiquetant en aliments secs dont la forme est déterminée par la forme des trous de passage (37).

2. - Dispositif selon la revendication 1, dans lequel ledit dispositif de chauffage (24) est du type à air et est adapté pour envoyer un flux d'air chauffé incident sur lesdites au moins deux parois planes (35).

3. - Dispositif selon la revendication 1 ou 2, dans lequel la première unité de traitement est dotée d'un dispositif de minuterie adapté pour définir un temps de traitement pendant lequel la matière comestible insérée est déchiquetée et chauffée à l'intérieur de la première unité de traitement (3).

4. - Dispositif selon l'une des revendications précédentes, dans lequel est prévue une structure de support (32) définissant une paroi de support supérieure (33) sur laquelle sont disposées côte à côte la première unité de traitement (3) et la seconde unité de traitement (13) ; la structure de support (32) portant ledit dispositif de formage (22) disposé sous la paroi de support (33) et la seconde unité (13) et communiquant avec une partie inférieure de ladite seconde cavité.

5. - Dispositif selon l'une des revendications précédentes, dans lequel une lame de coupe plate (40) est prévue se déplaçant sur un plan parallèle au plan sur lequel reposent les parois plates (35) entre une position d'extraction dans laquelle la lame plate (40) est disposée à distance des parois plates (35) superposées et une position d'insertion dans laquelle la lame de coupe (40) est disposée dans une position d'insertion entre les faces en regard des parois plates (35) superposées afin d'interrompre la continuité du noyau et de le déchiqueter ; le mouvement de la lame de coupe plate (40) est effectué manuellement ou au moyen d'un actionneur.
